# EUROPÄISCHE PATENTSCHRIFT

(11) **EP 0 613 770 B1**
(45) Veröffentlichungstag und Bekanntmachung des Hinweises auf die Patenterteilung: **05.11.1997**
(21) Anmeldenummer: 94102563.7
(22) Anmeldetag: 21.02.1994
(51) Int. Cl.: B32B 27/20, B65D 65/40

(54) **Siegelfähige orientierte Polyolefin-Mehrschichtfolie, Verfahren zu ihrer Herstellung und ihre Verwendung**
Sealable oriented polyolefinic multilayer film, process for its manufacture and its use
Film multicouche thermosoudable et orienté en polyoléfine, procédé pour sa préparation et son utilisation

(30) Priorität: 27.02.1993 DE 4306154
(43) Veröffentlichungstag der Anmeldung: 07.09.1994
(73) Patentinhaber: HOECHST AKTIENGESELLSCHAFT, 65926 Frankfurt am Main (DE)
(72) Erfinder: Murschall, Ursula, Dr., D-55283 Nierstein (DE); Peiffer, Herbert, Dr., D-55126 Mainz (DE); Schlögl, Gunter, Dr., D-65779 Kelkheim (DE)

(56) Entgegenhaltungen:
- EP-A- 0 217 598
- EP-A- 0 266 650
- EP-A- 0 379 913
- EP-A- 0 408 971
- NL-A- 7 708 335
- DATABASE WPI Week 8916, Derwent Publications Ltd., London, GB; AN 89-118948 & JP-A-1 065 175 (NEW JAPAN CHEM.)

## Beschreibung

Die Erfindung betrifft eine orientierte Polyolefin-Mehrschichtfolie, umfassend eine Basisschicht, die im wesentlichen Polypropylen enthält, und mindestens eine siegelfähige Deckschicht, die 0,1 bis 0,5 Gew.-% SiO₂ enthält. Die Folien zeichnen sich durch einen niedrigen Reibungskoeffizienten in Verbindung mit einer ausgezeichneten Siegelfähigkeit und hervorragenden antistatischen Eigenschaften aus.

Im Stand der Technik sind Folien mit einem niedrigen Reibungskoeffizienten beschrieben. Die Anforderungen an die Verarbeitungsfähigkeit der Folien und deren Lauffähigkeit auf automatischen Maschinen sind im Laufe der Jahre ständig gestiegen. Aus diesem Grund werden immer niedrigere Reibungskoeffizienten gefordert, wobei heute der Begriff "niedrig" Reibungswerte in einer Größenordnung von 0,3 bis 0,1 umfaßt, wohingegen vor einigen Jahren eine Reibung von 0,4 bis 0,5 durchaus als ausgezeichnet niedrig galt.

Die DE-A-20 01 032 beschreibt Folien aus verschiedenen thermoplastischen Kunststoffen, deren Gleiteigenschaften durch Zusatz von Carbonsäureamiden und Antiblockmitteln verbessert sind. Da in die Deckschichten alleine keine ausreichende Menge an Gleitmittel eingearbeitet werden kann, wird die zusätzliche Einarbeitung der Amide in die Basisschicht empfohlen. Diese Folien haben einen Reibungs-koeffizienten im Bereich von 0,4 bis 0,8 und entsprechen damit nicht mehr den heutigen Qualitätsanforderungen.

Die US-A-4,117,193 beschreibt mehrschichtige Folien aus einer Polypropylen-Basisschicht, welche ein Gleitmittel und ein Antiblockmittel und ein Antistatikmittel enthält. Die Deckschicht dieser Folien besteht aus einem Polymerblend und enthält zusätzlich ein Gleitmittel und ein Antiblockmittel. Das Polymerblend besteht aus einem Ethylen-Butylen-Copolymer und einem polyolefinischen Harz wie HDPE oder LDPE. Es ist beschrieben, daß die mangelhaften Gleiteigenschaften der Folien durch den Zusatz von Gleit- und Antiblockmitteln alleine nicht genügend verbessert werden können. Aus diesem Grund wird die Deckschicht durch Zusatz von HDPE oder LDPE in Kombination mit einem Gleit- und Antiblockmittel modifiziert. Die Reduktion des Reibungskoeffizienten ist nach den Beispielen und Vergleichsbeispielen wesentlich auf den Zusatz von HDPE zurückzuführen. Reine Copolymer-Deckschichten mit gleicher Additivzusammensetzung weisen Reibungskoeffizienten von 0,7 bis 0,8 auf. Die Folien kombinieren hervorragende Reibungskoeffizienten mit einer guten Bedruckbarkeit. Sie sind jedoch durch den Zusatz des reibungsvermindernden polyolefinischen Harzes in der Trübung und im Glanz stark verbesserungsbedürftig.

Die EP-A-0 402 100 beschreibt Polypropylenfolien, die 0,01 bis 0,5 Gew.-% eines sphärischen SiO₂ und 0,3 bis 5 Gew.-% eines Hydroxy-Fettsäure-Glycerids enthalten. Diese Erfindung betrifft einschichtige und mehrschichtige Folien. Mehrschichtige Ausführungsformen weisen sowohl in der Deckschicht als auch in der Basisschicht die Kombination von SiO₂ und Glycerid auf. Es ist beschrieben, daß die ausgewählten Mengen an SiO₂ und Glycerid wesentlich für die vorteilhaften Eigenschaften der Folien sind und Abweichungen von diesen Bereichen nicht mehr zu dem gewünschten Ergebnis führen. Die Folien zeichnen sich durch eine gute Transparenz, Gleitfähigkeit und Metallhaftung aus. Sie zeigen jedoch nach längerer Lagerzeit einen Belag auf der Oberfläche, der das Aussehen der Folien beeinträchtigt. Dieser Effekt ist auch als "blooming" bekannt und wird durch die Migration bestimmter Additive, insbesondere der Glyceride, an die Oberfläche der Folien verursacht.

Die EP-A-0 182 463 beschreibt eine mehrschichtige Folie, welche 0,05 bis 0,2 Gew.-% tertiäres aliphatisches Amin in der Basisschicht und eine Kombination von Silikonöl und SiO₂ in der siegelfähigen Deckschicht enthält. Nach der Beschreibung erhält man durch das überraschende Zusammenwirken von SiO₂, Silikonöl und Amin in Verbindung mit einer ausgewählten Deckschichtdicke von kleiner als 0,8 µm Folien mit Reibungskoeffizienten von 0,3 und kleiner. Trotz dieses hervorragenden Reibungskoeffizienten sind die Verarbeitungseigenschaften der Folie mangelhaft. Sie ist insbesondere nicht bedruckbar und daher für viele Anwendungen nicht geeignet.

Die EP-A-0 143 130 offenbart Folien, die ein Carbonsäureamid in der Basisschicht und ebenfalls die Kombination von Silikonöl und SiO₂ in der Deckschicht enthalten. Ähnlich wie in der oben erwähnten EP-A-0 182 463 wird eine synergistische Wirkung der drei ausgewählten Komponenten auf den Reibungskoeffizienten beschrieben. Auch diese Folien sind trotz ihrer vorteilhaften Gleitfähigkeit mangelhaft in der Verarbeitung. Auch ihnen fehlt die wichtige Eigenschaft Bedruckbarkeit.

Die EP-A-0 194 588 und EP-A-0 217 598 beschreiben analog eine weiterentwickelte Folie, welche trotz guter Gleiteigenschaften durch Silikonölzusatz gut bedruckbar ist. Bei diesen Folien wird nur in eine Deckschicht Silikonöl, gegebenenfalls in Kombination mit SiO₂, eingearbeitet. Die zweite silikonölfreie Deckschicht wird zur Verbesserung der Bedruckbarkeit coronabehandelt. Anschliessend erfolgt die Übertragung von Silikonöl auf die Oberfläche dieser behandelten zweiten Deckschicht durch Kontakt mit der silikonölhaltigen ersten Deckschicht. Durch diesen Kunstgriff erhält man eine mit Silikonöl ausgerüstete Folie mit guten Gleiteigenschaften, die gleichzeitig auf der coronabehandelten Seite gut bedruckbar und dennoch siegelfähig ist. Dieser Folie haftet der Nachteil an, daß sie nur einseitig bedruckbar ist. Dies ist besonders nachteilig für die Verwendung der Folie im Verpackungsbereich. Verpackungen benötigen auf ihrer zweiten Oberfläche häufig weitere Kennzeichnungen, beispielsweise eine Strichcodierung, und erfordern aus diesem Grund eine beidseitig bedruckbare Folie mit guten Gleiteigenschaften. Weiterhin hat es sich als nachteilig erwiesen, daß die Vorbehandlungsintensität der coronabehandelten Oberfläche durch das Siloxan nicht mehr meßbar ist. Dadurch ist es dem Folienverarbeiter nicht ohne weiteres möglich, die Oberflächenspannung der Folie und damit ein wichtiges Qualitätsmerkmal zu überprüfen. Auch die Verarbeitungseigenschaften der Folie sind noch verbesserungsbedürftig.

Die EP-A 0 0379 913 beschreibt eine biaxial orientierte Kunststofffolie auf Basis von Polypropylen, die ein anorganisches teilchenförmiges Neutralisationsmittel, insbesondere Calciumcarbonat oder Magnesiumoxid enthält. Die Teilchen sind mit einem Überzug aus Wachs, Fettsäure Fettsäuresalz oder Fettsäureester versehen. Die Folie zeichnet sich durch verbesserte Gleiteigenschaften aus.

Die EP-A 0 408 971 beschreibt eine biaxial orientierte weiße Folie mit einer Polypropylen-Basisschicht, die Titandioxid und Calciumcarbonat enthält. Die Folie ist einseitig oder beidseitig mit Deckschichten versehen. Das Titandioxid weist eine Beschichtung aus mindestens einem anorganischen Oxid und organischen Verbindungen mit polaren und unpolaren Gruppen auf.

In Anwendung der bekannten Lehren hat sich gezeigt, daß übliches SiO₂ bei der Herstellung der Folien zu Ablagerungen an der Düsenlippe und zu einem erheblichen Abrieb auf den Walzen führt, über welche die Folie während der Produktion läuft. Es wurde gefunden, daß dieser Abrieb durch das in den Deckschichten enthaltene SiO₂ verursacht wird. Dieser Abrieb führt zu mehreren Schwierigkeiten. Zum einen müssen die Düsenlippe und die Walzen häufig gereinigt werden, da die Folie sonst während der Produktion schlecht läuft. Die Ablagerungen an der Düsenlippe führen zu einer Streifenbildung auf der Folie, die die Optik beeinträchtigt. Zusätzlich treten durch diese Verunreinigungen Probleme bei der Coronabehandlung auf. An den mit SiO₂-Abrieb behafteten Stellen der Walze schlägt die Coronabehandlung durch und führt zum sogenannten unerwünschten Rückseiteneffekt. Durch diesen Rückseiteneffekt treten beim Weiterverarbeiten der Folie wie z. B. Bedrucken oder Metallisieren reklamationsfähige Fehlstellen auf. Mangelhaft sind die in üblicher Weise mit SiO₂ ausgerüsteten Folien auch bezüglich ihrer Rollenaufmachung und in ihrem Warmblockverhalten.

Der vorliegenden Erfindung liegt somit die Aufgabe zugrunde, eine mehrschichtige Polypropylenfolie zur Verfügung zu stellen, die die Nachteile der im Stand der Technik beschriebenen Folien vermeidet und insbesondere für die Weiterver arbeitung geeignet ist. Die Folie soll einen niedrigen Reibungskoeffizienten und hervorragende antistatische Eigenschaften aufweisen. Weiterhin ist gefordert, daß die Folie siegelfähig und bedruckbar ist. Diese Verbesserungen sollen jedoch das äußere Erscheinungsbild der Folie nicht beeinträchtigen, d. h. die Folie soll gleichzeitig eine möglichst niedrige Trübung und einen hohen Glanz aufweisen.

Erfindungsgemäß wird diese Aufgabe gelöst durch eine Folie der eingangs genannten Gattung, deren kennzeichnendes Merkmal darin besteht, daß die siegelfähige Deckschicht 0,1 bis 0,5 Gew.-% SiO₂ enthält, welches organisch nachbehandelt ist und einen mittleren Teilchendurchmesser von 2 bis 6 µm, vorzugsweise 4 bis 5 µm, aufweist, wobei das Verhältnis von mittlerem Teilchendurchmesser zur Deckschichtdicke im Bereich von 3 bis 11 liegen soll.

Die Basisschicht der erfindungsgemäßen Mehrschichtfolie enthält im wesentlichen ein Propylenpolymer und gegebenenfalls zugesetzte Additive in jeweils wirksamen Mengen. Das Polypropylenpolymere enthält zum überwiegenden Teil (mindestens 90 %) Propylen und besitzt einen Schmelzpunkt von 140 C oder höher, vorzugsweise 150 bis 170 C. Isotaktisches Homopolypropylen mit einem n-heptanlöslichen Anteil von 6 Gew.-% und weniger, bezogen auf das isotaktische Homopolypropylen, Copolymere von Ethylen und Propylen mit einem Ethylengehalt von 5 Gew.-% oder weniger, Copolymere von Propylen mit C₄-C₈--Olefinen mit einem -Olefingehalt von 5 Gew.-% oder weniger stellen bevorzugte Propylenpolymere für die Basisschicht dar, wobei isotaktisches Polypropylen besonders bevorzugt ist. Das Propylenpolymere der Basisschicht hat im allgemeinen einen Schmelzflußindex von 0,5 g/10 min bis 10 g/10 min, vorzugsweise 1,5 g/10 min bis 4 g/10 min, bei 230 C und einer Kraft von 21,6 N (DIN 53 735). Die angegebenen Gewichtsprozente beziehen sich auf das jeweilige Copolymer.

Unter siegelfähigen Olefinpolymeren werden im Rahmen der vorliegenden Erfindung Co- und Terpolymere des Propylens sowie Mischungen aus zwei oder mehreren dieser Co- und/oder Terpolymeren verstanden. Die Co- und Terpolymeren enthalten Propylen als Hauptkomponente in einer Menge von mindestens 50 Gew.-%, bezogen auf das jeweilige Polymere. Als Comonomere sind Ethylen und -Olefine mit 4 bis 10 C-Atomen geeignet. Für die Erfindung hat sich die VerwendungvonPropylen-Ethylen-Copolymeren, Propylen-Butylen-Copolymeren und Propylen-Ethylen-Butylen-Terpolymeren sowie Mischungen aus einem oder mehreren dieser Propylenpolymeren als besonders vorteilhaft erwiesen.

Insbesondere sind statistische Ethylen-Propylen-Copolymere mit einem Ethylengehalt von 2 bis 10 Gew.-%, bevorzugt 5 bis 8 Gew.-%, oder statistische Propylen-Butylen-1-Copolymere mit einem Butylengehalt von 4 bis 25 Gew.-%, bevorzugt 10 bis 20 Gew.-%, jeweils bezogen auf das Gesamtgewicht des Copolymeren, oder statistische Ethylen-Propylen-Butylen-1-Terpolymere mit einem Ethylengehalt von 1 bis 10 Gew.-%, bevorzugt 2 bis 6 Gew.-%, und einem Butylen-1-Gehalt von 3 bis 20 Gew.-%, bevorzugt 8 bis 10 Gew.-%, jeweils bezogen auf das Gesamtgewicht des Terpolymeren, oder ein Blend aus einem Ethylen-Propylen-Butylen-1-Terpolymeren und einem Propylen-Butylen-1-Copolymeren mit einem Ethylengehalt von 0,1 bis 7 Gew.-% und einem Propylengehalt von 50 bis 90 Gew.-% und einem Butylen-1-Gehalt von 10 bis 40 Gew.-%, jeweils bezogen auf das Gesamtgewicht des Polymerblends, bevorzugt.

Die erfindungsgemäße Mehrschichtfolie umfaßt zumindest die vorstehend beschriebene Basisschicht und mindestens eine Deckschicht, welche die vorstehend beschriebenen siegelfähigen Propylenpolymeren oder Mischungen daraus enthält. In einer bevorzugten Ausführungsform besteht die Deckschicht im wesentlichen aus einem der vorstehend genannten Co- und Terpolymeren bzw. aus deren Mischungen wie ebenfalls vorstehend beschrieben. Je nach ihrem vorgesehenen Verwendungszweck kann die Mehrschichtfolie eine weitere Deckschicht auf der gegenüberliegenden Seite aufweisen. In einer bevorzugten Ausführungsform ist die Mehrschichtfolie dreischichtig, wobei gleiche oder verschiedene Deckschichten aufgebracht sein können.

Die Dicke der Deckschicht/en ist größer als 0,4 µm und liegt vorzugsweise im Bereich von 0,4 bis 2 µm, insbesondere 0,5 bis 1 µm, wobei beidseitige Deckschichten gleich oder verschieden dick sein können.

Die Gesamtdicke der erfindungsgemäßen Polyolefin-Mehrschichtfolie kann innerhalb weiter Grenzen variieren und richtet sich nach dem beabsichtigten Einsatz. Sie beträgt vorzugsweise 5 bis 70 µm, insbesondere 10 bis 50 µm, wobei die Basisschicht etwa 50 bis 90 % der Gesamtfoliendicke ausmacht.

Die Deckschicht enthält 0,1 bis 0,5 Gew.-% SO₂, bezogen auf das Gewicht der Deckschicht, welches organisch nachbehandelt ist und welches einen mittleren Teilchendurchmesser von 3 bis 6 µm aufweist, wobei das Verhältnis von Teilchendurchmesser und Deckschichtdicke im Bereich von 3 bis 11 liegen soll, vorzugweise etwa 4 bis 10, insbesondere 6 bis 8, beträgt. SiO₂ wird im allgemeinen durch Mahlung von Silica-Gel hergestellt und ist eine synthetisch hergestellte hochporöse, reine Kieselsäure, welche eine völlig amorphe Struktur im Gegensatz zu kristallinen Kieselsäuren aufweist. Der SiO₂-Gehalt liegt im allgemeinen über 95 %, insbesondere im Bereich von 98 bis 99,5 %. Erfindungsgemäß sind die SiO₂-Teilchen organisch nachbehandelt und weisen eine Beschichtung auf, welche 0,5 bis 5 % einer aliphatischen Carbonsäure enthält. Als aliphatische Carbonsäuren sind aliphatische Hydroxydi- und -tricarbonsäuren oder Stearinsäure bevorzugt. Im allgemeinen weisen die Säuren zwei bis fünf, bevorzugt zwei bis drei, Hydroxygruppen auf. Als aliphatische Carbonsäuren sind Tartronsäure (Hydroxymalonsäure), Äpfelsäure (Monohydroxybernsteinsäure), Weinsäure (Dihydroxybernsteinsäure) und Citronensäure bevorzugt. Als ganz besonders vorteilhaft haben sich citronensäurehaltige Beschichtungen erwiesen. Aufgrund der organischen Beschichtung reagieren die SiO₂-Teilchen in wäßrigen Lösungen leicht sauer. Der pH-Wert einer 5%igen wäßrigen Suspension liegt in einem Bereich von 3 bis 5, bevorzugt beträgt er 4.

Überraschenderweise zeigen SiO₂-haltige Folien, die den obengenannten Bedingungen genügen, neben einem besonders guten Reibungskoeffizienten eine hervorragende Antistatik und ein sehr niedriges Warmblockverhalten. Es hat sich gezeigt, daß die Mengen, in welchen Antistatika üblicherweise zugesetzt werden, erheblich reduziert werden können.

Zur Erzielung dieser Verbesserungen ist es wesentlich, ein Verhältnis von Teilchendurchmesser zu Deckschichtdicke im Bereich von 3 bis 11, vorzugsweise von etwa 5 bis 8, einzuhalten und gleichzeitig ein organisch nachbehandeltes SiO₂ zu verwenden. Durch diese Maßnahmen konnte des weiteren der Abrieb auf den Walzen während des Herstellungsprozesses drastisch vermindert werden. Dadurch sind keine zusätzlichen Reinigungsmaßnahmen mehr notwendig, welche die Herstellkosten empfindlich verteuern. Rückseiteneffekte bei der Coronabehandlung treten praktisch nicht mehr auf.

Neben diesem ausgewählten Deckschichtadditiv kann die erfindungsgemäße Mehrschichtfolie zusätzlich Neutralisationsmittel, Stabilisatoren, Gleitmittel, Kohlenwasserstoffharze und Antistatika enthalten. Die nachstehenden Angaben in Gewichtsprozent beziehen sich auf das Gewicht der jeweiligen Schicht, der das Additiv zugesetzt ist.

Neutralisationsmittel sind vorzugsweise Calciumstearat und/oder Calciumcarbonat einer mittleren Teilchengröße von höchstens 0,7 µm, einer absoluten Teilchengröße von kleiner 10 µm und einer spezifischen Oberfläche von mindestens 40 m²/g.

Als Stabilisatoren können die üblichen stabilisierend wirkenden Verbindungen für Ethylen-, Propylen- und andere α-Olefinpolymere eingesetzt werden. Deren Zusatzmenge liegt zwischen 0,05 und 2 Gew.-%. Besonders geeignet sind phenolische Stabilisatoren, Alkali-/Erdalkalistearate und/oder Alkali-/Erdalkalicarbonate.
Phenolische Stabilisatoren werden in einer Menge von 0,1 bis 0,6 Gew.-%, insbesondere 0,15 bis 0,3 Gew.-%, und mit einer Molmasse von mehr als 500 g/mol bevorzugt. Pentaerythrityl-Tetrakis-3-(3,5-di-Tertiärbutyl-4-Hydroxyphenyl)-Propionat oder 1,3,5-Trimethyl-2,4,6-tris(3,5-di-Tertiärbutyl-4-Hydroxybenzyl)benzol sind besonders vorteilhaft.

Gleitmittel sind höhere aliphatische Säureamide, höhere aliphatische Säureester, Wachse und Metallseifen sowie Polydimethylsiloxane. Die wirksame Menge an Gleitmittel liegt im Bereich von 0,1 bis 3 Gew.-%. Besonders geeignet ist der Zusatz von höheren aliphatischen Säureamiden im Bereich von 0,15 bis 0,25 Gew.-% in der Basisschicht und/oder den Deckschichten. Ein insbesondere geeignetes aliphatisches Säureamid ist Erucasäureamid.

Kohlenwasserstoffharze sind niedermolekulare Polymere, deren Molekulargewicht im allgemeinen in einem Bereich von 300 bis 8 000, vorzugsweise 400 bis 5 000, vorzugsweise 500 bis 2 000, liegt. Damit ist das Molekulargewicht der Harze deutlich niedriger als das der Propylenpolymeren, welche die Hauptkomponente der einzelnen Folienschichten bilden und im allgemeinen ein Molekulargewicht von über 100 000 haben.

Bei dem empfohlenen niedrigmolekularen Harz handelt es sich um ein natürliches oder synthetisches Harz mit einem Erweichungspunkt von 60 bis 180 °C, vorzugsweise 80 bis 150 °C, bestimmt nach ASTM E-28. Unter den zahlreichen niedrigmolekularen Harzen sind die Kohlenwasserstoffharze bevorzugt, und zwar in Form der Erdölharze (Petroleumharze), Styrolharze, Cyclopentadienharze und Terpenharze (diese Harze sind in Ullmanns Encyklopädie der technischen Chemie, 4. Auflage, Band 12, Seiten 525 bis 555, beschrieben). Die wirksame Menge an niedrigmolekularem Harz beträgt 3 bis 15 Gew.-%, vorzugsweise 5 bis 10 Gew.-%, bezogen auf die Schicht. Geeignete Erdölharze sind in zahlreichen Schriften beschrieben wie beispielsweise EP-A-0 180 087, auf die hier ausdrücklich Bezug genommen wird.

Bevorzugte Antistatika sind Alkali-alkansulfonate, polyethermodifizierte, d. h. ethoxylierte und/oder propoxylierte Polydiorganosiloxane (Polydialkylsiloxane, Polyalkylphenylsiloxane und dergleichen) und/oder die im wesentlichen geradkettigen und gesättigten aliphatischen, tertiären Amine mit einem aliphatischen Rest mit 10 bis 20 Kohlenstoffatomen, die mit ω-Hydroxy-(C₁-C₄)-alkyl-Gruppen substituiert sind, wobei N,N-bis-(2-hydroxyethyl)-alkylamine mit 10 bis 20 Kohlenstoffatomen, vorzugsweise 12 bis 18 Kohlenstoffatomen, im Alkylrest besonders geeignet sind. Die wirksame Menge an Antistatikum liegt im Bereich von 0,05 bis 3 Gew.-%. Als Antistatikum ist weiterhin Glycerinmonostearat bevorzugt.

Die Erfindung betrifft weiterhin ein Verfahren zur Herstellung der erfindungsgemäßen Mehrschichtfolie nach dem an sich bekannten Coextrusionsverfahren.
Im Rahmen dieses Verfahrens wird so vorgegangen, daß die den einzelnen Schichten der Folie entsprechenden Schmelzen durch eine Flachdüse coextrudiert werden, die so erhaltene Folie zur Verfestigung auf einer oder mehreren Walze/n abgezogen wird, die Folie anschließend biaxial gestreckt (orientiert), die biaxial gestreckte Folie thermofixiert und gegebenenfalls an der zur Behandlung vorgesehenen Oberflächenschicht corona- oder flammbehandelt wird.

Die biaxiale Streckung (Orientierung) kann simultan oder aufeinanderfolgend durchgeführt werden, wobei die aufeinanderfolgende biaxiale Streckung, bei der zuerst längs (in Maschinenrichtung) und dann quer (senkrecht zur Maschinenrichtung) gestreckt wird, bevorzugt ist.

Zunächst wird wie beim Coextrusionsverfahren üblich das Polymere bzw. die Polymermischung der einzelnen Schichten in einem Extruder komprimiert und verflüssigt, wobei die gegebenenfalls zugesetzten Additive bereits im Polymer bzw. in der Polymermischung enthalten sein können. Die Schmelzen werden dann gleichzeitig durch eine Flachdüse (Breitschlitzdüse) gepreßt, und die ausgepreßte mehrschichtige Folie wird auf einer oder mehreren Abzugswalzen abgezogen, wobei sie abkühlt und sich verfestigt.

Die so erhaltene Folie wird dann längs und quer zur Extrusionsrichtung gestreckt, was zu einer Orientierung der Molekülketten führt. In Längsrichtung wird vorzugsweise 4:1 bis 7:1 und in Querrichtung vorzugsweise 8:1 bis 10:1 gestreckt. Das Längsstrecken wird man zweckmäßigerweise mit Hilfe zweier entsprechend dem angestrebten Streckverhältnis verschieden schnellaufender Walzen durchführen und das Querstrecken mit Hilfe eines entsprechenden Kluppenrahmens.

An die biaxiale Streckung der Folie schließt sich ihre Thermofixierung (Wärmebehandlung) an, wobei die Folie etwa 0,5 bis 10 s lang bei einer Temperatur von 140 bis 160 °C gehalten wird. Anschließend wird die Folie in üblicher Weise mit einer Aufwickeleinrichtung aufgewickelt.

Es hat sich als besonders günstig erwiesen, die Abzugswalze oder -walzen, durch die die ausgepreßte Folie auch abgekühlt und verfestigt wird, bei einer Temperatur von 50 bis 110 °C zu halten.

Die Temperaturen, bei denen Längs- und Querstreckung durchgeführt werden, können variieren. Im allgemeinen wird die Längsstreckung vorzugsweise bei 120 bis 150 °C und die Querstreckung vorzugsweise bei 155 bis 190 °C durchgeführt.

Gegebenenfalls kann/können wie oben erwähnt nach der biaxialen Streckung eine oder beide Oberfläche/n der Folie nach einer der bekannten Methoden corona- oder flammbehandelt werden.

Bei der Coronabehandlung wird zweckmäßigerweise so vorgegangen, daß die Folie zwischen zwei als Elektroden dienenden Leiterelementen hindurchgeführt wird, wobei zwischen den Elektroden eine so hohe Spannung, meist Wechselspannung (etwa 10 bis 20 kV und 20 bis 40 kHz), angelegt ist, daß Sprüh- oder Coronaentladungen stattfinden können. Durch die Sprüh- oder Coronaentladung wird die Luft oberhalb der Folienoberfläche ionisiert und reagiert mit den Molekülen der Folienoberfläche, so daß polare Einlagerungen in der im wesentlichen unpolaren Polymermatrix entstehen.

Für eine Flammbehandlung mit polarisierter Flamme (vgl. US-A-4,622,237) wird eine elektrische Gleichspannung zwischen einem Brenner (negativer Pol) und einer Kühlwalze angelegt. Die Höhe der angelegten Spannung beträgt zwischen 500 und 3 000 V, vorzugsweise liegt sie im Bereich von 1 500 bis 2 000 V. Durch die angelegte Spannung erhalten die ionisierten Atome eine erhöhte Beschleunigung und treffen mit größerer kinetischer Energie auf die Polymeroberfläche. Die chemischen Bindungen innerhalb des Polymermoleküls werden leichter aufgebrochen, und die Radikalbildung geht schneller vonstatten. Die thermische Belastung des Polymeren ist hierbei weitaus geringer als bei der Standardflammbehandlung, und es können Folien erhalten werden, bei denen die Siegeleigenschaften der behandelten Seite sogar besser sind als diejenigen der nicht behandelten Seite.

Die erfindungsgemäße Folie zeichnet sich durch einen sehr guten Reibungskoeffizienten (0,2 bis 0,3) in Verbindung mit guten antistatischen Eigenschaften aus. Zusätzlich ist die Folie sehr gut siegelfähig und bedruckbar. Die Folie ist gegenüber bekannten Folien in ihrem Glanz und in ihrer Trübung nicht beeinträchtigt. Die Folie ist sehr gut konfektionierbar und zeigt folglich eine hervorragende Rollenaufmachung. Die Folie zeigt sehr niedrige Warmblockwerte.

Es wurde gefunden, daß bei Verwendung von beschichtetem SiO₂ kaum noch ein SiO₂-Abrieb auf den Walzen oder an der Düsenlippe während der Herstellung auftritt. Die Coronabehandlung kann problemlos durchgeführt werden, ohne daß es zu Rückseiteneffekten kommt. Damit treten nunmehr keine Probleme bei der Weiterverarbeitung auf. Durch die gezielte Einstellung eines bestimmten Verhältnisses von Teilchendurchmesser und Deckschichtdicke werden eine hervorragende Rollenaufmachung und sehr niedrige Warmblockwerte gewährleistet. Es wurde gefunden, daß bei der Abstimmung von Teilchengröße und Deckschichtdicke die SiO₂-Partikel gleichmäßig verteilt aus der Deckschicht herausragen und nur dann die Folieneigenschaften in der beschriebenen Weise verbessert werden.

Die Erfindung wird nun anhand von Ausführungsbeispielen noch näher erläutert.

### Beispiel 1

Es wurde durch Coextrusion und anschließende stufenweise Orientierung in Längs- und Querrichtung eine dreischichtige Folie mit einer Gesamtdicke von 20 µm und einem ABA-Schichtaufbau hergestellt, d. h. die Basisschicht B war von zwei gleichen Deckschichten A umgeben.

Die Folie wurde vor der Aufrollung einer einseitigen Coronabehandlung unterzogen. Die Oberflächenspannung betrug auf dieser Seite infolge dieser Behandlung 39 bis 40 mN/m. Alle Schichten enthielten zur Stabilisierung 0,13 Gew.-% Pentaerythrityl-Tetrakis-4-(3,5-ditertiärbutyl-4-hydroxyphenyl)-propionat(®Irganox 1010) und als Neutralisationsmittel 0,06 Gew.-% Calciumstearat.

Die Basisschicht B bestand im wesentlichen aus einem Polypropylenhomopolymeren mit einem n-heptanlöslichen Anteil von 4 Gew.-% und einem Schmelzpunkt von 160 bis 162 °C. Der Schmelzflußindex des Polypropylenhomopolymeren betrug 3,4 g/10 min bei 230 °C und 21,6 N Belastung (DIN 53 735). Die Basisschicht enthielt 0,12 Gew.-% Erucasäureamid mit einem Schmelzpunkt von 78 bis 82 °C.

Die polyolefinischen Deckschichten bestanden im wesentlichen aus einem statistischen Ethylen-Propylen-Copolymeren mit einem Gehalt von 4,0 Gew.-% Ethylen und 95,5 Gew.-% Propylen. Die Deckschichten enthielten 0,30 Gew.-% eines mit Zitronensäure gecoateten Siliciumdioxids mit einem mittleren Teilchendurchmesser von 4 µm. Die Dicke der Deckschichten betrug jeweils 0,7 µm. Das Verhältnis von mittlerem Teilchendurchmesser zur Deckschichtdicke lag bei 5,7.

### Beispiel 2

Beispiel 1 wurde wiederholt. Die polyolefinischen Deckschichten bestanden jedoch aus einem Ethylen-Propylen-Buten-1-Terpolymeren mit einem Gehalt von 3,5 Gew.-% Ethylen, 88,5 Gew.-% Propylen und 8 Gew.-% Buten-1. Die Deckschichten enthielten 0,35 Gew.-% eines mit Zitronensäure gecoateten Siliciumdioxids mit einem mittleren Teilchendurchmesser von 4 µm. Die Dicke der Deckschichten betrug jeweils 0,6 µm. Das Verhältnis von mittlerem Teilchendurchmesser zur Deckschichtdicke lag bei 6,7.

### Beispiel 3

Beispiel 1 wurde wiederholt. Die polyolefinischen Deckschichten bestanden jedoch aus einem Blend aus einem Ethylen-Propylen-Buten-1-Terpolymeren und einem Propylen-Buten-1-Copolymeren mit einem Gehalt von 0,7 Gew.-% Ethylen, 81,3 Gew.-% Propylen und 18,0 Gew.-% Buten-1, jeweils bezogen auf das Gesamtgewicht des Polymerblends. Die Deckschichten enthielten 0,35 Gew.-% eines mit Zitronensäure gecoateten Siliciumdioxids mit einem mittleren Teilchendurchmesser von 4 µm. Die Dicke der Deckschichten betrug jeweils 0,8 µm. Das Verhältnis von mittlerem Teilchendurchmesser zur Deckschichtdicke lag bei 5,0.

### Beispiel 4

Beispiel 2 wurde wiederholt. Die Dicke der Deckschichten betrug jeweils 0,9 µm. Das Verhältnis von mittlerem Teilchendurchmesser zur Deckschichtdicke lag bei 4,4.

### Beispiel 5

Beispiel 2 wurde wiederholt. Die polyolefinischen Deckschichten enthielten 0,30 Gew.-% eines mit Zitronensäure gecoateten Siliciumdioxids mit einem mittleren Teilchendurchmesser von 5 µm. Die Dicke der Deckschichten betrug jeweils 0,7 µm. Das Verhältnis von mittlerem Teilchendurchmesser zur Deckschichtdicke lag bei 7,1.

### Vergleichsbeispiel 1

Beispiel 2 wurde wiederholt. Das eingesetzte Siliciumdioxid ist jedoch nicht gecoatet.

### Vergleichsbeispiel 2

Beispiel 2 wurde wiederholt. Die Dicke der polyolefinischen Deckschichten betrug 0,3 µm. Das Verhältnis von mittlerem Teilchendurchmesser zur Deckschichtdicke lag bei 13,3.

### Vergleichsbeispiel 3

Beispiel 2 wurde wiederholt. Die Dicke der polyolefinischen Deckschichten betrug 1,6 µm. Das Verhältnis von mittlerem Teilchendurchmesser zur Deckschichtdicke lag bei 2,5.

### Vergleichsbeispiel 4

Beispiel 5 wurde wiederholt. Das eingesetzte Siliciumdioxid hatte einen mittleren Teilchendurchmesser von 5 µm und ist nicht gecoatet. Die Dicke der Deckschichten betrug jeweils 0,4 µm. Das Verhältnis von mittlerem Teilchendurchmesser zur Deckschichtdicke lag bei 12,5.

### Vergleichsbeispiel 5

Beispiel 2 wurde wiederholt. Das eingesetzte Siliciumdioxid hatte einen mittleren Teilchendurchmesser von 1 µm.

Die Eigenschaften der Folien gemäß den Beispielen und Vergleichsbeispielen sind in den nachstehenden Tabellen 1 und 2 zusammengefaßt.

Zur Charakterisierung der Rohstoffe und der Folien wurden die folgenden Meßmethoden benutzt:

### Schmelzflußindex

Der Schmelzflußindex wurde in Anlehnung an DIN 53 735 bei 21,6 N Belastung und 230 °C gemessen.

### Schmelzpunkt

DSC-Messung, Maximum der Schmelzkurve, Aufheizgeschwindigkeit 20 °C/min.

### Siegelnahtfestigkeit

Zur Bestimmung wurden zwei 15 mm breite Folienstreifen übereinandergelegt und bei 130 °C, einer Siegelzeit von 0,5 s und einem Siegeldruck von 1,5 N/mm² (Gerät: Brugger Typ NDS, einseitig beheizte Siegelbacke) versiegelt. Die Siegelnahtfestigkeit wurde nach der T-Peel-Methode bestimmt.

### Reibung

Die Reibung wurde in Anlehnung an DIN 53 375 bestimmt.

### Oberflächenspannung

Die Oberflächenspannung wurde mittels der sogenannten Tintenmethode (DIN 53 364) bestimmt.

### Warmblockwerte

Beim Warmblocktest werden die Abschubkräfte (N) gemessen, die erforderlich sind, um zwei mit Folie eingeschlagene Päckchen, die 2 Stunden einer Temperatur von 70 °C und einem Auflagegewicht von 200 g ausgesetzt waren, zu verschieben oder zu trennen.

### Nachweis der organischen Beschichtung

Eine organische Nachbehandlung der SiO₂-Teilchen läßt sich mittels RMA nachweisen. Hierzu wird die Folienoberfläche mittels Sauerstoffeinwirkung über 15 min angeätzt, so daß die in der Folie enthaltenen SiO₂-Teilchen freiliegen. An diesen freigeätzten SiO₂-Teilchen wird eine ESCA-Messung durchgeführt. Organisch beschichtete SiO₂-Teilchen weisen im ESCA-Spektrum einen Kohlenstoff- und Sauerstoff-Peak auf, der bei unbeschichteten Teilchen nicht zu finden ist.

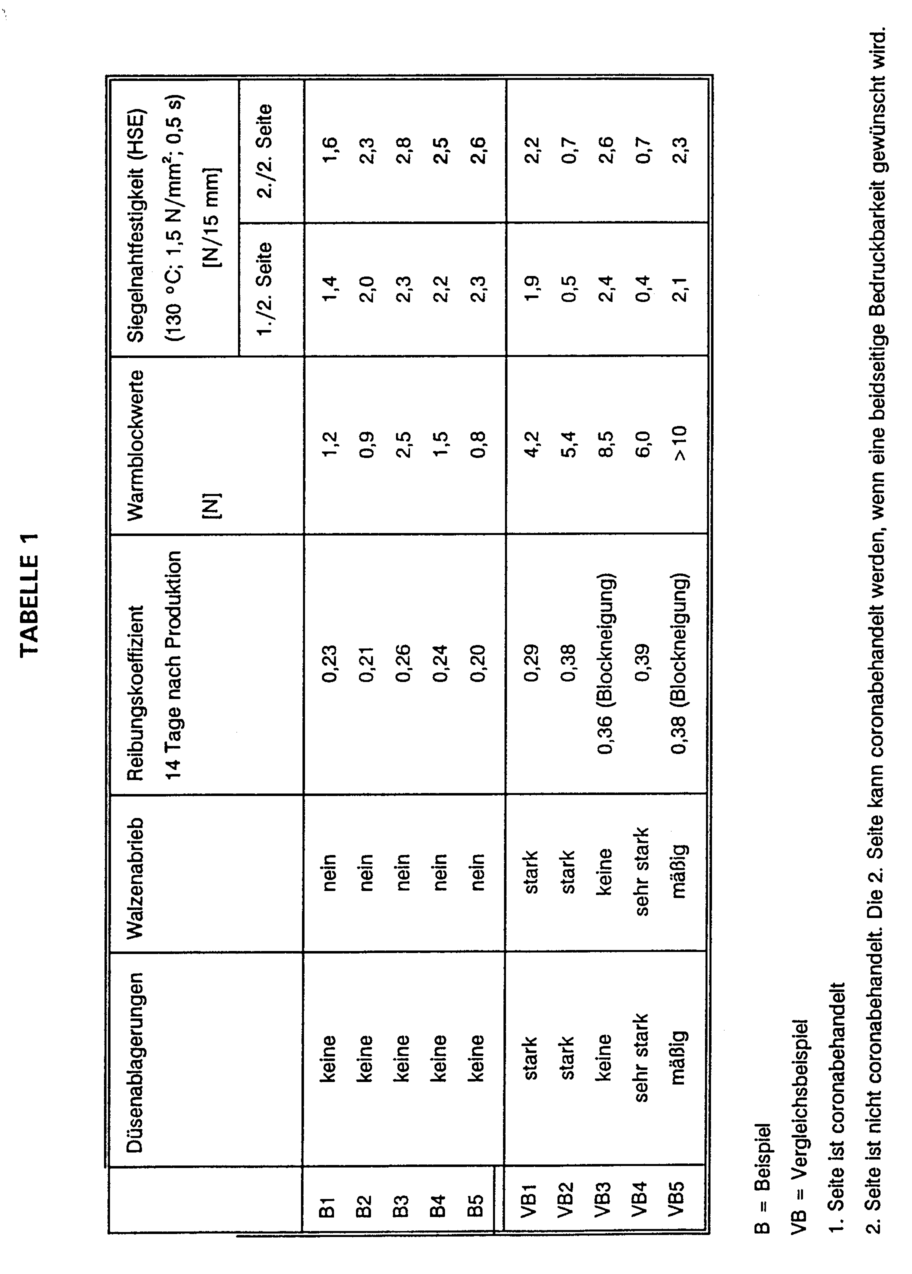

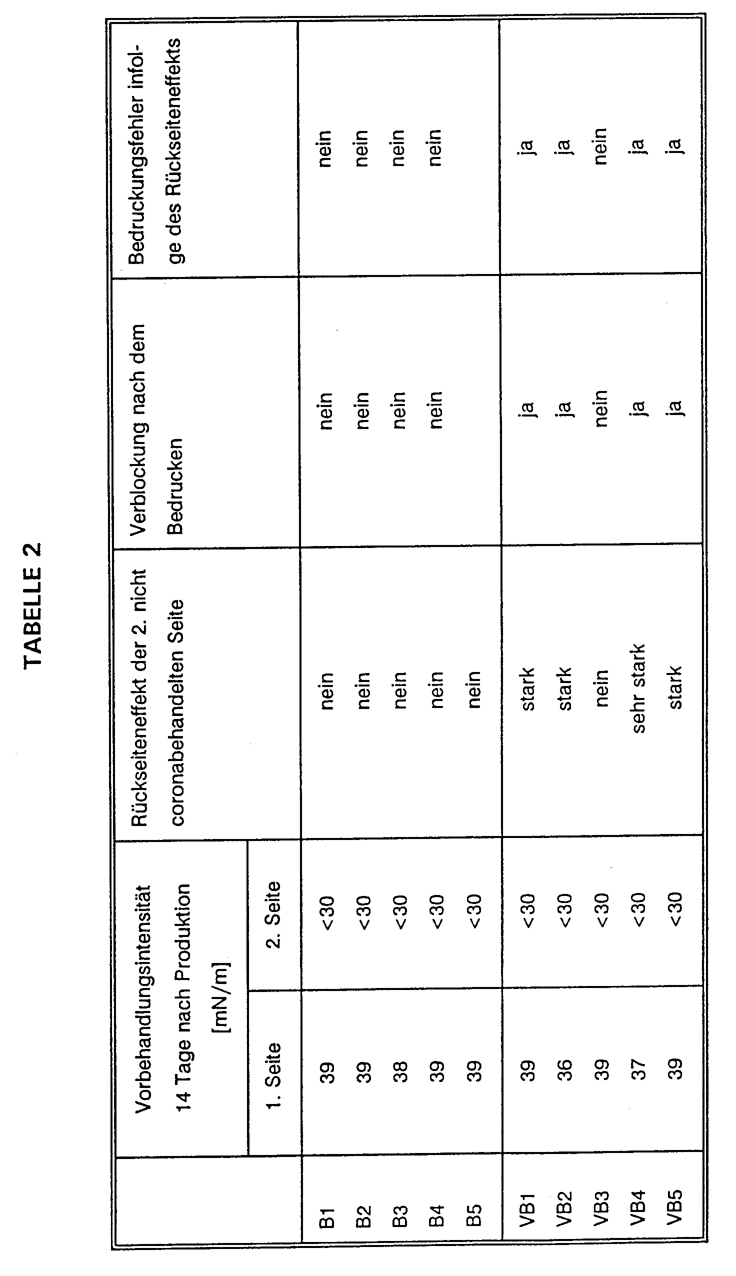

## Patentansprüche

1. Orientierte Polyolefin-Mehrschichtfolie, umfassend eine Basisschicht, die im wesentlichen Polypropylen enthält, und mindestens eine siegelfähige Deckschicht, die 0,1 bis 0,5 Gew.-% SiO₂ enthält, dadurch gekennzeichnet,
daß das SiO₂ organisch nachbehandelt ist und eine Beschichtung aufweist, die 0,5 - 5% einer aliphatischen Carbonsäure enthält und
daß das SiO₂ einen mittleren Teilchendurchmesser von 2 bis 6 µm aufweist, wobei das Verhältnis von mittlerem Teilchendurchmesser zur Deckschichtdicke im Bereich von 3 bis 11 liegen soll.

2. Polyolefin-Mehrschichtfolie nach Anspruch 1, dadurch gekennzeichnet, daß die aliphatische Carbonsäure eine aliphatische Hydroxydicarbonsäure oder eine aliphatische Hydroxytricarbonsäure oder Stearinsäure ist.

3. Polyolefin-Mehrschichtfolie nach einem der Ansprüche 1 und/oder 2, dadurch gekennzeichnet, daß das SiO₂ einen mittleren Teilchendurchmesser von 2 bis 5 µm, vorzugsweise 4 µm, aufweist.

4. Verfahren zur Herstellung der Polyolefin-Mehrschichtfolie nach Anspruch 1, bei dem die den einzelnen Schichten der Folie entsprechenden Schmelzen durch eine Flachdüse coextrudiert werden, die coextrudierte Folie über eine Abzugswalze, deren Temperatur zwischen 80 und 110 C liegt, abgezogen wird, die Folie biaxial gestreckt wird mit einem Längsstreckverhältnis von 4:1 bis 7:1 und einem Querstreckverhältnis von 8:1 bis 10:1, die biaxial gestreckte Folie thermofixiert, gegebenenfalls coronabehandelt und anschließend aufgewickelt wird.

5. Verwendung einer Polyolefin-Mehrschichtfolie nach einem oder mehreren der Ansprüche 1 bis 3 als Verpackungsfolie.

6. Verwendung einer Polyolefin-Mehrschichtfolie nach einem oder mehreren der Ansprüche 1 bis 3 zur Bedruckung.

7. Laminat, umfassend eine Polyolefin-Mehrschichtfolie nach einem oder mehreren der Ansprüche 1 bis 3 und Papier oder Pappe oder mindestens eine weitere Folie aus thermoplastischem Kunststoff.

## Claims

1. An oriented, multilayer polyolefin film comprising a base layer which essentially contains polypropylene, and at least one heat-sealable outer layer which contains from 0.1 to 0.5% by weight of SiO₂, wherein the SiO₂ has been subjected to organic aftertreatment and has a coating which contains 0.5-5% of an aliphatic carboxylic acid, and wherein the SiO₂ has a mean particle diameter of from 2 to 6 µm, where the ratio between the mean particle diameter and the outer layer thickness is to be in the range from 3 to 11.

2. A multilayer polyolefin film as claimed in claim 1, wherein the aliphatic carboxylic acid is an aliphatic hydroxydicarboxylic acid or an aliphatic hydroxytricarboxylic acid or stearic acid.

3. A multilayer polyolefin film as claimed in claim 1 and/or 2, wherein the SiO₂ has a mean particle diameter of from 2 to 5 µm, preferably 4 µm.

4. A process for the production of a multilayer polyolefin film as claimed in claim 1, in which the melts corresponding to the individual layers of the film are coextruded through a flat-film die, the coextruded film is taken off over a take-off roll whose temperature is between 80 and 110°C, the film is stretched biaxially with a longitudinal stretching ratio of from 4:1 to 7:1 and a transverse stretching ratio of from 8:1 to 10:1, and the biaxially stretched film is heat-set, if desired corona-treated and subsequently wound up.

5. A method of using a multilayer polyolefin film as claimed in one or more of claims 1 to 3 as a packaging film.

6. A method of using a multilayer polyolefin film as claimed in one or more of claims 1 to 3 for printing.

7. A laminate comprising a multilayer polyolefin film as claimed in one or more of claims 1 to 3 and paper or cardboard or at least one further film made from a thermoplastic.

## Revendications

1. Feuille multicouche de polyoléfine orientée, comportant une couche de base, qui pour l'essentiel contient du polypropylène, et au moins une couche de couverture thermoscellable qui contient de 0,1 à 0,5 % en poids de SiO₂, caractérisée en ce que :
le SiO₂ a subi un post-traitement organique et comporte un revêtement qui contient de 0,5 à 5 % d'un acide carboxylique aliphatique, et
le SiO₂ a une granulométrie moyenne de 2 à 6 µm, le rapport entre le diamètre moyen des particules et l'épaisseur des couches de couverture devant être compris entre 3 et 11.

2. Feuille multicouche de polyoléfine selon la revendication 1, caractérisée en ce que l'acide carboxylique aliphatique est un acide dicarboxylique hydroxylé aliphatique ou un acide tricarboxylique hydroxylé aliphatique ou l'acide stéarique.

3. Feuille multicouche de polyoléfine selon l'une des revendications 1 et/ou 2, caractérisée en ce que le SiO₂ a une granulométrie moyenne de 2 à 5 µm, de préférence de 4 µm.

4. Procédé pour fabriquer la feuille multicouche de polyoléfine selon la revendication 1, dans lequel les matières fondues, correspondant aux différentes couches de la feuille, sont extrudées à travers une filière plate, la feuille coextrudée est tirée sur un cylindre de tirage dont la température est comprise entre 80 et 110°C, la feuille subit un étirage biaxial avec un rapport d'étirage longitudinal de 4:1 à 7:1 et un rapport d'étirage transversal de 8:1 à 10:1, et la feuille ayant subi une orientation biaxiale est soumise à un thermofixage, éventuellement à un traitement corona, puis à un enroulement.

5. Utilisation d'une feuille multicouche de polyoléfine selon l'une des revendications 1 à 3 en tant que feuille d'emballage.

6. Utilisation d'une feuille multicouche de polyoléfine selon l'une ou plusieurs des revendications 1 à 3, pour impression.

7. Stratifié comportant une feuille multicouche de polyoléfine selon l'une ou plusieurs des revendications 1 à 3, et du papier ou du carton, ou au moins une autre feuille constituée d'un matériau thermoplastique.
